# EUROPÄISCHE PATENTSCHRIFT

(11) **EP 1 704 385 B1**
(45) Veröffentlichungstag und Bekanntmachung des Hinweises auf die Patenterteilung: **27.02.2008**
(21) Anmeldenummer: 04802996.1
(22) Anmeldetag: 22.12.2004
(51) Int. Cl.: G01B 11/24

(54) **OPTISCHES ABBILDUNGSSYSTEM**
OPTICAL IMAGING SYSTEM
SYSTEME D'IMAGERIE OPTIQUE

(30) Priorität: 23.12.2003 DE 10361569
(43) Veröffentlichungstag der Anmeldung: 27.09.2006
(73) Patentinhaber: Robert Bosch GmbH, 70442 Stuttgart (DE)
(72) Erfinder: THOMINET, Vincent, CH-1110 Morges (CH); KALLMANN, Ulrich, 72070 Tübingen (DE)
(86) Internationale Anmeldenummer: PCT/DE2004/002816
(87) Internationale Veröffentlichungsnummer: WO 2005/061989

(56) Entgegenhaltungen:
- EP-A- 0 047 936
- EP-A- 0 872 752
- GB-A- 673 971
- GB-A- 709 431
- US-A- 3 927 254
- US-A- 4 875 777

## Beschreibung

Die Erfindung bezieht sich auf ein optisches Abbildungssystem mit einer Anordnung von optischen Komponenten zum Erzeugen einer Abbildung einer zumindest abschnittsweise radialsymmetrischen Licht abstrahlenden Oberfläche eines Bauteils für eine optische Oberflächenmessung desselben, wobei die Flächennormale des radialsymmetrischen Bereichs in Messlage des Bauteils unter einem Winkel von höchstens 90° gegenüber der Bauteilachse bzw. der Symmetrieachse geneigt ist.

### Stand der Technik

Ein derartiges optisches Abbildungssystem ist beispielsweise in der WO02/14845 und der WO01/27558 angegeben. Dieses bekannte Abbildungssystem ermöglicht es, Messungen auch an Oberflächenbereichen in engen Bohrungen durchzuführen, wobei bei der Abbildung Interferenzmuster erzeugt werden, die mit Methoden der sogenannten Weißlichtinterferometrie ausgewertet werden.

Grundsätzlich sind auch andere interferometrische Messmethoden zum Beurteilen von Oberflächeneigenschaften geeignet, wie etwa die Heterodyninterferometrie. Allgemein sei zur Interferometrie auf A. Donges, R. Noll, in "Lasermesstechnik", Hüthig Verlag, 1993 und zur Heterodyninterferometrie auf H.J. Tiziani, "Optical methods for precision measurements", Optical and Quantum Electronics, Vol 21, 253-282, 1989 verwiesen. Oberflächeneigenschaften können beispielsweise Rauigkeit, geometrische Formen oder geometrische Formabweichungen sein. Als optische Messmethoden kommen auch z.B. Methoden der Bildauswertung in Frage, die andere Informationen als die Interferenzerscheinungen in der Abbildung bewerten.

Insbesondere auch die Fertigung von Präzisionsteilen erfordert zur Sicherung der Qualität der entsprechenden Bauteile geeignete Messmethoden zur Erfassung z.B. der Geometrie und der Beschaffenheit der Teile. Auch hierbei leisten die optischen Messmethoden wie die Bilderfassung und Bildauswertung sowie die Interferometrie wichtige Beiträge. Zusätzlich zu der Anforderung an die Präzision eines Messsystems bei der Erfassung der interessierenden Merkmale kommt die Anforderung an eine hohe Messgeschwindigkeit, die eine Integration des Messsystems in einen schnellen und automatisierten Produktionsprozess ermöglicht. Diese Anforderungen lassen sich für viele Präzisionsteile, die z.B. eine vorwiegend ebene Geometrie besitzen, durch bekannte Verfahren und verfügbare optische Komponenten erfüllen. Auch können bereits Messungen in engen Hohlräumen mit den vorstehend genannten Systemen nach der WO02/14845 und WO01/27558 vorgenommen werden. Für eine Klasse von Präzisionsteilen, die z.B. durch gekrümmte Außenflächen des Bauteils oder annähernd durch einen Außenkonus charakterisiert werden können, wie z.B. Ventilnadeln, existiert bisher keine zufrieden stellende Lösung, die die oben genannten Anforderungen gleichzeitig erfüllen könnte.

Aus EP 0872752 A ist ein optisches Abbildungssystem zum Erfassen von Oberflächen eines Objektes mit zwei gekrümmten Spiegeln bekannt, wobei das Abbildungssystem in Form eines Teleskops zur Beobachtung von Himmelskörpern ausgebildet ist. Es ist vorgesehen, dass parallel auf den ersten Spiegel einfallende Strahlen auf die spiegelnde Fläche des zweiten Spiegels gerichtet werden. Ein Empfänger für diese Strahlen ist zwischen den beiden Spiegeln positioniert.

Weiter wird in GB 709431 A ein optisches Abbildungssystem mit einer Anordnung von optischen Komponenten für eine interferometrische Oberflächenmessung eines Bauteils beschrieben. Zu den optischen Komponenten zählen ein hyperbolischer, radialsymmetrisch ausgebildeter Spiegel mit einer zentralen Öffnung und ein diesem nachgeordneter parabolischer Spiegel. Das zu prüfende Bauteil wird dabei nicht in dem Bereich zwischen den beiden Spiegeln angeordnet.

Der Erfindung liegt die Aufgabe zugrunde, ein optisches Abbildungssystem bereitzustellen, mit dem zumindest abschnittsweise radialsymmetrische Außen-Oberflächen derart abgebildet werden, dass die Oberflächeneigenschaften schnell und mit möglichst wenig Aufwand feststellbar sind.

### Vorteile der Erfindung

Diese Aufgabe der Erfindung wird mit den Merkmalen des Anspruches 1 gelöst. Hierbei ist vorgesehen, dass die Anordnung einen Spiegel mit einer zentralen Öffnung und ein im Strahlengang dem Spiegel nachgeordnetes reflektierendes optisches Element aufweist, wobei der Spiegel und das reflektierende optische Element derart angeordnet sind, dass das abzubildende Bauteil zwischen dem Spiegel und dem reflektierenden optischen Element positioniert werden kann und von dem so positionierten Bauteil reflektiertes Licht über den Spiegel und das reflektierende optische Element durch die Öffnung des Spiegels gelenkt wird.

Die Anordnung ist vorteilhaft für die Vermessung von Außen-Oberflächen von Bauteilen mit radialsymmetrischen Bereichen.

Die auf diese Weise erreichte Abbildung eines radialsymmetrischen Bereiches, beispielsweise einer abschnittsweisen oder vollständigen Außenkonusfläche oder zylindrischen oder auch konkav oder konvex bezüglich der Achsrichtung gekrümmten Außenfläche, ergibt einen großen Messbereich, der mit einer Messung abgedeckt werden kann. Dies ermöglicht eine kurze Messzeit und in vielen Fällen, wie z.B. bei der Prüfung von Ventilnadeln, den Einsatz eines solchen optischen Messsystems in der automatisierten Fertigung.

Die genannten Maßnahmen ermöglichen das Sammeln eines großen Anteils der Lichtstrahlen, ausgehend von einem Punkt auf der radialsymmetrischen Außenoberfläche trotz des ungünstigen Abstrahlungswinkels. Dies lässt eine hohe Auflösung der Abbildung zu und trägt zu einer hohen Präzision des Messsystems bei.

Vorteilhafte Ausgestaltungen der Erfindung sind in den abhängigen Ansprüchen angegeben.

Die präzise Abbildung des zu vermessenden radialsymmetrischen Bereichs unter Abdeckung eines großen Messbereichs wird dadurch begünstigt, dass der Spiegel zumindest abschnittsweise radialsymmetrisch ausgebildet ist und im Messzustand zum direkten Aufnehmen des von dem Bereich abgestrahlten Lichts ausgebildet und angeordnet ist.

Der Aufbau des Abbildungssystems bei vorteilhafter Strahlführung wird auch dadurch begünstigt, dass der Spiegel umlaufend radialsymmetrisch ausgebildet ist und eine zentrale Öffnung aufweist und dass ein im Strahlengang dem Spiegel nachgeordnetes reflektierendes optisches Element das von dem Spiegel reflektierte Licht aufnimmt und durch die zentrale Öffnung lenkt.

Ist vorgesehen, dass das reflektierende optische Element ebenfalls radialsymmetrisch ausgebildet ist und eine zentrale Öffnung aufweist, ergibt sich eine einfache Anordnungsmöglichkeit z.B. auch langgestreckter Bauteile bezüglich des Abbildungssystems, woraus sich Vorteile beim Einsatz in einem Fertigungsprozess ergeben.

Um gewünschte Abbildungseigenschaften zu erzielen, sind des Weiteren die Maßnahmen von Vorteil, dass dem reflektierenden optischen Element zur Aufbereitung der Abbildung im Strahlengang Linsenelemente nachgeordnet sind.

Genaue Oberflächenmessungen können z.B. dadurch vorgenommen werden, dass die Anordnung so ausgebildet ist, dass sie eine interferometrisch auswertbare Abbildung erzeugt.

Ein vorteilhafter Aufbau lässt sich auch dadurch erreichen, dass die Anordnung einen flächenhaften Bildaufnehmer aufweist, auf den die Abbildung erfolgt.

Ist vorgesehen, dass die Anordnung als Objektarm eines interferometrisch arbeitenden Messsystems ausgestaltet ist, ergibt sich eine günstige Integration in ein derartiges Messsystem.

Für die Ankopplung an ein Auswertesystem können auch die Maßnahmen von Vorteil sein, dass die Anordnung in der Weise ausgebildet ist, dass sie ein Zwischenbild erzeugt.

Eine weitere Aufbauvariante besteht darin, dass dem Spiegel zur Aufnahme der von diesem reflektierten Strahlung ein transmissives optisches Element unmittelbar nachgeordnet ist.

Mit den vorstehend angegebenen Maßnahmen können die genannten, zumindest abschnittsweise radialsymmetrischen Außen-Oberflächenbereiche, wie etwa die Außenkonusflächen, vorteilhaft abgebildet werden. Derartige Außenflächen weisen, wenn sie optisch abgebildet werden, eine vorwiegende Abstrahlungsrichtung der Lichtstrahlen auf, die entlang der Flächennormalen verläuft. Diese Flächennormalen sind für die radialsymmetrischen Außen-Oberflächenbereiche, beispielsweise die Außenkonusflächen, radialsymmetrisch angeordnet und schließen, je nach Art des radialsymmetrischen Flächenbereiches, einen relativ großen Winkel von z.B. > 45° gemessen zur Längsachse des radialsymmetrischen Bereichs ein. Die beschriebene Anordnung von optischen Flächen und Komponenten ist in der Lage, die von der zu vermessenden Fläche des Bauteils ausgehenden Lichtstrahlen so umzulenken und zu sammeln, dass trotz der ungünstigen Abstrahlungsrichtung relativ zur Längsachse des radialsymmetrischen Bereichs bzw. des Bauteils eine für die Auswertung geeignete Abbildung der Fläche entsteht. Zusätzlich ist das optische System so ausgelegt, dass z.B. ein gesamter umlaufender Bereich in ein Gebiet abgebildet wird, welches mit einfachen Maßnahmen und in kurzer Zeit eine weitere Auswertung ermöglicht. Das Bild eines Umlaufs der radialsymmetrischen Fläche kann direkt von einem flächenhaft messenden Lichtdetektor, wie z.B. einer CCD-Kamera aufgefangen werden oder einem weiteren optischen System zur Verfügung gestellt werden, das z.B. auf der Grundlage der Weißlichtinterferometrie arbeitet.

Zum Auswerten der Abbildung wird diese vorteilhaft in einer zur optischen Achse der Anordnung bzw. der Symmetrieachse des radialsymmetrischen, zu vermessenden Oberflächenbereichs senkrechten Ebene erzeugt, wobei die Abbildung auch Erhebungen oder Vertiefungen erhalten kann, die bei der weiteren Auswertung z.B. durch Abtasten auf einfache Weise berücksichtigt werden können. Beispielsweise kann auf diese Weise ein Übergangsbereich einer Außenkonusfläche einer Ventilnadel in einen zylindrischen Bereich derselben vermessen werden, wobei die kreisringförmige Übergangslinie zwischen den beiden Bereichen in der Abbildung als in Richtung des Strahlenganges am höchsten (zuvorderst) liegende Grad-Linie wiedergegeben wird.

### Zeichnung

Die Erfindung wird nachfolgend anhand von Ausführungsbeispielen unter Bezugnahme auf die Zeichnungen näher erläutert. Es zeigen:
- Fig. 1: eine schematische Darstellung eines optischen Abbildungssystems für einen Außenkonus eines Bauteils mit einem Strahlenverlauf und
- Fig. 2: einen vergrößerten Ausschnitt des Abbildungssystems nach Fig. 1.

### Ausführungsbeispiel

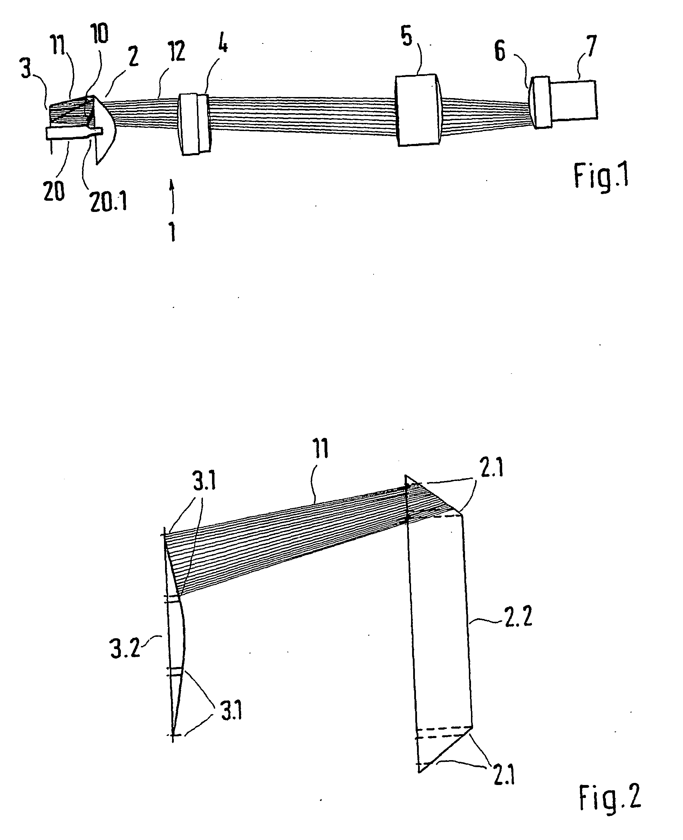

Wie aus den Fig. 1 und 2 ersichtlich, ist einem Bauteil 20 ein optisches Abbildungssystem mit einer Anordnung 1 von optischen Komponenten zugeordnet, mit dem eine umlaufende radialsymmetrische Außenkonusfläche des Bauteils 20 beispielsweise auf einen Bildaufnehmer 6 einer Verarbeitungseinrichtung 7 abgebildet wird.

Ein von der zu vermessenden Außenkonusfläche 20.1 z.B. durch Reflexion abgestrahltes Strahlenbündel 10 trifft auf eine entsprechend der Außenkonusfläche 20.1 radialsymmetrisch um dieselbe Symmetrieachse umlaufende nutzbare Fläche 2.1 eines Spiegels 2, der eine zentrale Öffnung 2.2 aufweist. Das von der nutzbaren Fläche 2.1 des Spiegels 2 reflektierte Strahlenbündel 10 wird auf ein weiteres reflektierendes optisches Element 3, vorzugsweise in Form eines weiteren Spiegels, gerichtet und von diesem durch die Öffnung 2.2 des Spiegels 2 gelenkt und über im weiteren Strahlengang angeordnete Linsenelemente 4, 5 aufbereitet, um auf dem Bildaufnehmer 6 die optische Abbildung der zu vermessenden Außenkonusfläche 20.1 zu erzeugen. Das weitere reflektierende optische Element 3 besitzt ebenfalls einen zu der gemeinsamen Symmetrieachse radialsymmetrisch umlaufenden nutzbaren Flächenbereich 3.1, der eine zentrale Öffnung 3.2 umgibt. Das Bauteil 20 kann auf einfache Weise beispielsweise während eines Fertigungsprozesses durch die zentrale Öffnung 3.2 derart in das optische Abbildungssystem eingeführt werden, dass es die für die gewünschte Abbildung erforderliche relative Lage zu dem Spiegel 2 einnimmt.

Das zu vermessende Bauteil 20, z.B. eine Ventilnadel, wird also in dem optischen Abbildungssystem positioniert, wobei die zentralen Öffnungen 2.2 und 3.2 des Spiegels und des weiteren reflektierenden optischen Elementes 3 eine einfache Anordnung zulassen. Bei kürzeren Bauteilen ist auch eine Ausführungsform denkbar, bei der das weitere reflektierende optische Element in Form des weiteren Spiegels 3 keine zentrale Öffnung besitzt und das Bauteil von der Seite zwischen dem Spiegel 2 und dem weiteren reflektierenden optischen Element 3 eingeführt wird. Die genaue Form und Größe der Spiegel 2 und 3 ist dem zu vermessenden Bauteil bzw. dem zu vermessenden radialsymmetrischen Bereich, beispielsweise in Form der Außenkonusfläche 20.1 angepasst, um eine für die nachfolgende Auswertung geeignete Abbildung zu erzeugen. Wird das abgestrahlte Strahlenbündel 10 durch Reflexion erzeugt, so wird zumindest der zu vermessende Bereich des Bauteils 20 je nach gewünschter Arbeitsweise des auswertenden Verarbeitungsabschnittes des Messsystems geeignet beleuchtet. Beispielsweise wird eine kurzkohärente Strahlung zur Beleuchtung verwendet, wenn die Auswertung mittels Weißlichtinterferometrie vorgenommen werden soll und Interferenzmuster zur Beurteilung der Oberflächeneigenschaften zugrunde gelegt werden sollen. Die Spiegel 2, 3 können neben den reinen Umlenkungseigenschaften auch zum Miterzeugen der gewünschten Abbildung Abbildungseigenschaften besitzen und z.B. eben, konkav oder konvex gekrümmt sein und auch in ihrem Neigungswinkel zum Führen des Strahlenbündels unterschiedlich bezüglich der Symmetrieachse ausgerichtet sein.

Das Abbildungssystem kann z.B. ganz oder teilweise als Objektarm eines Interferometers ausgebildet sein, dem ein Referenzarm zugeordnet ist, wie bei interferometrischen Messungen üblich. Das optische Abbildungssystem kann auch derart ausgebildet sein, dass mit ihm ein der Auswertung zugrunde zu legendes Zwischenbild erzeugt wird.

Mit dem optischen Abbildungssystem können insbesondere radialsymmetrische Flächenbereiche des Bauteils 20 für eine weitere Auswertung abgebildet werden, deren Flächennormalen schräg zur Symmetrieachse verlaufen und in einem Winkelbereich zwischen 0° und 90° zur Symmetrieachse geneigt sind. Das heißt ein Winkel der Normalen von 90° zur Symmetrieachse würde zu einem zylindrischen Oberflächenbereich des Bauteils 20 gehören, während ein Normalenwinkel von 0° bezüglich der Symmetrieachse eine Fläche senkrecht zur Symmetrieachse darstellen würde. Jedoch hat das beschriebene optische Abbildungssystem insbesondere Vorteile bei zwischen diesen Grenzflächen schräg zur Symmetrieachse verlaufenden Flächennormalen.

## Patentansprüche

1. Optisches Abbildungssystem mit einer Anordnung (1) von optischen Komponenten zum Erzeugen einer Abbildung eines Bauteils (20), aufweisend einen Spiegel (2) mit einer zentralen Öffnung (2.2) und ein im Strahlengang dem Spiegel (2) nachgeordnetes reflektierendes optisches Element (3),
**dadurch gekennzeichnet,**
**dass** der Spiegel (2) und das reflektierende optische Element (3) derart angeordnet sind, dass das abzubildende Bauteil (20) zwischen dem Spiegel (2) und dem reflektierenden optischen Element (3) positioniert werden kann und von dem so positionierten Bauteil (20) reflektiertes Licht über den Spiegel (2) und das reflektierende optische Element (3) durch die Öffnung (2.2) des Spiegels (2) gelenkt wird.

2. Abbildungssystem nach Anspruch 1, **dadurch gekennzeichnet, dass** der Spiegel (2) zumindest abschnittsweise radialsymmetrisch ausgebildet ist.

3. Abbildungssystem nach Anspruch 1 oder 2, **dadurch gekennzeichnet, dass** der Spiegel (2) umlaufend radialsymmetrisch ausgebildet ist.

4. Abbildungssystem nach Anspruch 3, **dadurch gekennzeichnet, dass** das reflektierende optische Element (3) ebenfalls radialsymmetrisch ausgebildet ist und eine zentrale Öffnung (3.2) aufweist.

5. Abbildungssystem nach einem der vorhergehenden Ansprüche, **dadurch gekennzeichnet, dass** dem reflektierenden optischen Element (3) zur Aufbereitung der Abbildung im Strahlengang Linsenelemente (4, 5) nachgeordnet sind.

6. Abbildungssystem nach einem der vorhergehenden Ansprüche, **dadurch gekennzeichnet, dass** die Anordnung (1) so ausgebildet ist, dass sie eine interferometrisch auswertbare Abbildung erzeugt.

7. Abbildungssystem nach einem der vorhergehenden Ansprüche, **dadurch gekennzeichnet, dass** die Anordnung (1) einen flächenhaften Bildaufnehmer (6) aufweist, auf den die Abbildung erfolgt.

8. Abbildungssystem nach einem der Ansprüche 1 bis 6, **dadurch gekennzeichnet, dass** die Anordnung (1) als Objektarm eines interferometrisch arbeitenden Messsystems ausgestaltet ist.

9. Abbildungssystem nach Anspruch 8, **dadurch gekennzeichnet, dass** die Anordnung (1) in der Weise ausgebildet ist, dass sie ein Zwischenbild erzeugt.

## Claims

1. Optical imaging system comprising an arrangement (1) of optical components for the generation of an image of a component (20), having a mirror (2) with a central opening (2.2), and a reflecting optical element (3) arranged downstream of the mirror (2),
**characterized in that**
the mirror (2) and the reflecting optical element (3) are arranged in such a way that the component (20) which is to be imaged may be positioned between the mirror (2) and the reflecting optical element (3), and light reflected from the component (20) positioned in this manner is channelled through the opening (2.2) of the mirror (2) via the mirror (2) and the reflecting optical element (3).

2. Imaging system according to Claim 1, **characterized in that** the mirror (2) is radially symmetrical, at least in places.

3. Imaging system according to Claim 1 or 2, **characterized in that** the mirror (2) is circumferentially radially symmetrical.

4. Imaging system according to Claim 3, **characterized in that** the reflecting optical element (3) is also formed radially symmetrically, and has a central opening (3.2).

5. Imaging system according to one of the preceding claims, **characterized in that** lens elements (4, 5) for processing the image are arranged in the beam path, downstream of the reflecting optical element (3).

6. Imaging system according to one of the preceding claims, **characterized in that** the arrangement (1) is formed in such a way that it produces an image which can be interferometrically analysed.

7. Imaging system according to one of the preceding claims, **characterized in that** the arrangement (1) has a two-dimensional image sensor (6), on which the imaging occurs.

8. Imaging system according to one of Claims 1 to 6, **characterized in that** the arrangement (1) is arranged as an object arm of an interferometrically working measuring system.

9. Imaging system according to Claim 8, **characterized in that** the arrangement (1) is formed in such a manner that it produces an intermediate image.

## Revendications

1. Système d'imagerie optique comportant un dispositif (100) de composants optiques pour générer l'image d'une pièce (20), comprenant un miroir (2) avec une ouverture centrale (2.2) et un élément optique réfléchissant (3) installé dans le chemin du faisceau du miroir (2),
**caractérisé en ce que**
le miroir (2) et l'élément optique réfléchissant (3) sont disposés pour que le composant (20 dont on forme l'image, puisse être positionné entre le miroir (2) et l'élément optique réfléchissant (3) et la lumière réfléchie par la pièce (20) ainsi positionnée puisse être conduite par le miroir (2) et l'élément optique réfléchissant (3) à travers l'ouverture (2.2) du miroir (2).

2. Système d'imagerie selon la revendication 1,
**caractérisé en ce que**
le miroir (2) a une symétrie radiale, au moins par segments.

3. Système d'imagerie selon la revendication 1 ou 2,
**caractérisé en ce que**
le miroir (2) est à symétrie radiale périphérique.

4. Système d'imagerie selon la revendication 3,
**caractérisé en ce que**
l'élément optique réfléchissant (3) est également à symétrie radiale et présente une ouverture centrale (3.2).

5. Système d'imagerie selon l'une des revendications précédentes,
**caractérisé en ce que**
les éléments de lentille (4, 5) sont installés dans le chemin du faisceau de l'élément optique réfléchissant (3) pour préparer l'image.

6. Système d'imagerie selon l'une des revendications précédentes,
**caractérisé en ce que**
le dispositif (1) est réalisé pour générer une image exploitable par interférométrie.

7. Système d'imagerie selon l'une des revendications précédentes,
**caractérisé en ce que**
le dispositif (1) comporte un capteur d'images (6) surfacique recevant l'image.

8. Système d'imagerie selon l'une des revendications 1 à 6,
**caractérisé en ce que**
le dispositif (1) et le bras objet d'un système de mesure interférométrique.

9. Système d'imagerie selon la revendication 8,
**caractérisé en ce que**
le dispositif (1) est réalisé pour générer une image intermédiaire.
